# EUROPEAN PATENT APPLICATION

(11) **EP 4 753 227 A1**
(43) Date of publication of application: **03.06.2026**
(21) Application number: 25218611.9
(22) Date of filing: 26.11.2025
(51) Int. Cl.: H04L 45/12, H04L 45/125

(54) **ORCHESTRATION SYSTEM FOR CONTROLLING ROUTING BY A NETWORK NODE**

(30) Priority: 28.11.2024 EP 24216289
(71) Applicant: Koninklijke KPN N.V., 3072 AP Rotterdam (NL)
(72) Inventor: Meunier, Ben Charles Emmanuel, Tonbridge, TN10 4JT (GB); Cronin, Harry Michael, Cambridge, CB1 3DE (GB)
(74) Representative: De Vries & Metman

(57) **Abstract**

The disclosure pertains to an orchestration system configured to control routing of data through a network of network nodes. At least one network node of this network may be configured to provide a first network link to a first network node and a second network link to a second network node. The orchestration system is configured to obtain a first node metric score assigned to the first network node and a second node metric score assigned to the second network node. The orchestration system may further be configured to provide routing information based on the first node metric score and second node metric score for the at least one network node. The routing information from the orchestration system may enable the at least one network node to route a first data segment, associated with a first data requirement, of the data over the first network link when the first node metric score satisfies the first data requirement for the first data segment, and the second node metric score does not satisfy the first data requirement. The first data requirement may be available in the at least one network node. The routing information from the orchestration system may further enable the at least one network node to route the first data segment over the second network link when the first node metric score and the second node metric score satisfy the first data requirement. The disclosure also pertains to a network node for use with such an orchestration system.

## Description

### TECHNICAL FIELD

The present disclosure relates to an orchestration system for controlling routing by a network node and to a network node, controlled using such an orchestration system. More particularly, the present disclosure relates to an orchestration system configured to control routing of data through a network of network nodes and to a network node controlled from such an orchestration system using routing information.

### BACKGROUND

Network nodes play a crucial role in routing data through a network. Each node, which can be a computer, switch, router, or other device, acts as a source point, intermediary point or receiving point for data. When data is sent from a source node, it is generally broken into packets, each containing a header with the destination address. These packets travel across the network through intermediary nodes, sometimes referred to as hops. For IP-level routing, each network node may use IP-routing tables to determine the best path for forwarding the packet towards its destination. This process involves checking the packet's IP header, consulting the routing table, and sending the packet to the next appropriate node.

Load balancing can significantly influence the routing of packets by distributing traffic across multiple paths to improve network efficiency and reliability. When multiple equal-cost paths to a destination exist, routers can employ various load balancing techniques to utilize these paths effectively. Per-flow load balancing, for instance, ensures that packets from the same flow (based on attributes like source and destination IP addresses, protocol, and port numbers) follow the same path, maintaining packet order. Alternatively, per-packet load balancing distributes individual packets across different paths, potentially achieving better link utilization but risking packet reordering.

Other factors than cost and load may also play a role for a network node to decide on the next network node. For example, study item 3GPP S1-233577 states that wireless systems may feature increasingly distributed networks and services. Such distributed networks and services can be offered from different organizations (e.g., administrative domains). Trust is an important factor in such systems. Distributed trust and user-centric trust are emerging as new functionalities for wireless systems to establish and maintain trust between devices, users, and networks.

US7984294 discloses a method and apparatus to determine a trust level of a path through a plurality of routers. An endpoint transmits a path setup message requesting a path reservation for a first path through a subset of the routers, by receiving a trust level message containing trust level information inserted by each router in the first path through the subset, and by evaluating the inserted trust level information to determine if the first path has a sufficient trust level. Another method and apparatus gather trust level information from a router by receiving a trust level message into which a trust level of the router can be inserted, by inserting trust level information of the router into the trust level message, and by re-transmitting the trust level message on a designated path.

### SUMMARY

The inventors have considered that when only trusted network nodes are used and untrusted network nodes are isolated and avoided, this may reduce the routing options available in the network and may therefore reduce network throughput and place a greater burden on those (trusted) network nodes. There exists a risk that one or more of these trusted nodes suffer, permanently or temporarily, from congestion. It is therefore desirable to have a more granular system for routing data in a network such that even un-trusted network nodes can contribute to data delivery, thus increasing the potential throughput of the network. However, the use of un-trusted network nodes shall not degrade privacy of the data below a certain threshold.

To that end, one aspect of the disclosure pertains to an orchestration system configured to control routing of data through a network of network nodes. At least one network node of this network may be configured to provide a first network link to a first network node and a second network link to a second network node. The at least one network node may be a source node, that generates the data or an intermediate node that forwards data to a next node in the network.

The orchestration system is configured to obtain a first node metric score assigned to the first network node and a second node metric score assigned to the second network node. The orchestration system may further be configured to provide routing information based on the first node metric score and second node metric score for the at least one network node. The routing information from the orchestration system may enable the at least one network node to route a first data segment, associated with a first data requirement, of the data over the first network link when the first node metric score satisfies the first data requirement for the first data segment, and the second node metric score does not satisfy the first data requirement. The first data requirement may be available in the at least one network node. The routing information from the orchestration system may further enable the at least one network node to route the first data segment over the second network link when the first node metric score and the second node metric score satisfy the first data requirement.

Another aspect of the disclosure involves a network node for routing data configured to provide a first network link to a first network node and a second network link to a second network node. The network node may be configured to obtain routing information based on a first node metric score, assigned to the first network node, and a second node metric score, assigned to the second network node. The network node may further be configured to route a first data segment, associated with a first data requirement, of the data over the first network link when the first node metric score satisfies the first data requirement for the first data segment and the second node metric score does not satisfy the first data requirement. The first data requirement may be available in the at least one network node. The network node may further be configured to route the first data segment over the second network link when the first node metric score and the second node metric score satisfy the first data requirement. The network node may be further configured to obtain the routing information from an orchestration system as disclosed herein.

The inventors have considered that a collection of data that is to be sent from a source node to a destination node may comprise different data segments or may need to be segmented into different data segments, to which data segments different requirements may apply. It should be appreciated that each segment may comprise at least one data packet. A minimum segment size (e.g. a minimum number of packets per segment) may apply, for example to reduce the number of forwarding decisions.

Hence, that data is or may be segmented using such one or more requirements applying to the data segment and use such one or more requirements when routing each of the data segments. The requirement(s) may be matched against network node metric scores of network nodes to which the data segment may be forwarded to finally decide on the network node to (and thus on the network link over) which the data segment is to be transmitted. A network node metric score is assumed to satisfy a data requirement if the node metric score meets or exceeds the criterion specified by the data requirement, indicating that the node is appropriate for routing the corresponding data segment. For example, if the first data requirement is a minimum trust level of 7, and a node has a trust score of 8, then the node's metric score satisfies the data requirement. The routing information based on the first node metric score and the second node metric score contains at least information that may indicate, represent, or be dependent on the first node metric score and the second node metric score for the network node. This may, for example, comprise a first class or a second class of metric score that can be evaluated in the network node against data requirements which may also be divided in corresponding classes.

This approach may assist in avoiding or reducing the chance of congestion of a network node. One example involves using a trust criterion. Whereas in the prior art, one or more routes of only trusted network nodes is used for data transmission, the disclosed orchestration system and network node enable using routes including untrusted or less trusted network nodes for some data segment(s) thereby offloading some data traffic from trusted network nodes. Other criteria than trust may be used alternatively or in addition, such as available energy in the network nodes and/or capability of network nodes that can be evaluated against data requirements to decide on a route through a network of network nodes.

In one embodiment, wherein the data to be routed may comprise a second data segment associated with a second data requirement, less strict than the first data requirement. For example, the second data segment may require a lower trust from a network node than the first data segment. Alternatively, or in addition, the second data segment may require less energy from a network node for transmission than for the first data segment. The orchestration system may be configured to provide routing information to the at least one network node enabling the at least one network node to route the second data segment over the second network link when the second node metric score satisfies the second data requirement. The embodiment enables data routing over other network nodes (here the second network node) rather than the network node(s) meeting the highest requirements (here the first network node), thereby assisting in avoiding or reducing network congestion.

In one embodiment, the first data requirement and the second data requirement as mentioned above may comprise a content level data requirement. The embodiment enables data routing based on user requirements, such as requirements set by the owner of the data.

In particular, in one embodiment, the first data requirement may comprise a first trust requirement for the first data segment. The first node metric score and the second node metric score may comprise a first node trust level and a second node trust level, respectively. The routing information may enable the at least one network node to route the first data segment, associated with the first trust requirement, of the data over the first network link when the first node trust score satisfies the first trust requirement for the first data segment, and the second node trust score does not satisfy the first trust requirement and to route the first data segment over the second network link when the first node trust score and the second node trust score satisfy the first trust requirement.

A trust requirement may refer to a data requirement specifying a minimum acceptable trust level that a network node must have to handle a particular data segment. Examples of trust requirements include nodes needing a trust level of at least 5 to handle sensitive data or compliance with certain security protocols. A node trust score may refer to a node metric score that quantifies the trustworthiness of a network node, for example based on factors like historical behavior, security certifications, or observed reliability. Examples of node trust levels include ratings assigned based on adherence to security protocols, absence of malicious activities, or validation by a trusted authority.

More particularly, in one embodiment, the data may comprise a second data segment associated with a second trust requirement, less strict than the first trust requirement, such as a lower trust requirement. The orchestration system may be configured to provide routing information to the at least one network node enabling the at least one network node to route the second data segment over the second network link when the second node trust score satisfies the second trust requirement.

In one embodiment, the network node may be configured such that the first data requirement comprises a first trust requirement for the first data segment. The first node metric score and the second node metric score may comprise a first node trust level and a second node trust level, respectively. The network node may further be configured to route the first data segment, associated with the first trust requirement, of the data over the first network link when the first node trust score satisfies the first trust requirement for the first data segment, and the second node trust score does not satisfy the first trust requirement. The network node may further be configured to route the first data segment over the second network link when the first node trust score and the second node trust score satisfy the first trust requirement.

More particularly, in one embodiment, the data may comprise a second data segment associated with a second trust requirement, less strict than the first trust requirement. The network node may be configured to obtain routing information from the orchestration system enabling the at least one network node to route the second data segment over the second network link when the second node trust score satisfies the second trust requirement.

Data privacy requirements may vary significantly, and as such, all data is not equally 'private' or sensitive. Within datasets, a spectrum of requirements is typically observed. On one end, there is non-private data, for example, information that doesn't directly and/or indirectly identify individuals. On the other end, multiple levels of private data can be distinguished, such as person identifying information, PII, (e.g. national identification number (ID), social security number (SSN), personal identification number (PIN), etc), quasi-identifying information, QID, (e.g. sex, date of birth, postal address, etc.) and sensitive information (e.g. disease, financial information, etc). Modern data mining processes employ sophisticated methods to identify sensitive information and process data according to individuals' personal privacy settings. Differences in data privacy requirements may be used for data routing in networks having network nodes complying to different trust levels for network nodes, thereby assisting in offloading some data traffic to less trusted nodes (here, the second network node) if the trust requirements allow this.

In one embodiment, the first data segment comprises an identifier of the first data requirement, such as a trust requirement identifier, enabling one or more of the network nodes of the network to route the first data segment using the identifier. The embodiment assists one or more network nodes in recognizing one or more data requirements by means of the identifier and evaluating the network node score(s) against the identified requirement(s).

In one embodiment, the orchestration system may be implemented as a centralized system configured to establish a remote connection with the at least one network node. The centralized system may be configured to provide the routing information over the remote connection. The embodiment facilitates centralized control of the routing paths through the networks and, possibly, centralized determination of the scores of the network nodes. The network nodes may provide this score information to the orchestration system in advance so that the centralized system can provide routing information to the network nodes considered. It is noted that network node metric scores may be agreed upon in a distributed manner, i.e. amongst the nodes, before the agreed score information is obtained by the centralized orchestration system. The network nodes can access the data requirements and so decide on the routing to the next network node. In one embodiment, the orchestration system is embodied in a telecommunications network, such as a 3GPP standard compliant telecommunications network, for example in a base station of such a network.

In one embodiment, the orchestration system may be implemented at least in part in the at least one network node. This embodiment enables the network node to obtain the routing information containing the network node scores of neighbour network nodes and to access the data requirement internally to decide on the routing of the respective data segments. Optionally, the network node may be a network node generating the data, i.e. the data source.

In one embodiment, the orchestration system may be implemented as distributed over a plurality of network nodes of the network.

In one embodiment, the orchestration system may be implemented at least in part in the at least one network node or be distributed over a plurality of network nodes. The orchestration system may be configured to obtain the data to be routed and to run at least one of a data segmentation algorithm and a data requirement association algorithm. In one embodiment, the data segmentation algorithm is configured to segment the data to obtain the first data segment, and second data segment and any further data segments, if needed. The data segmentation algorithm may already optimize the different data segments to each contain data corresponding to a similar data requirement. Alternatively, a data segment may contain data corresponding to different data requirements, in which case a strictest data requirement may be associated to the data segment. The data requirement association algorithm may be configured to associate the first data segment with the first data requirement, the second data segment with a second data requirement and any further data segment with a corresponding further data requirement.

The embodiment enables data segmentation and/or associating data requirements to data segments. It is noted that there may be multiple data segments associated with a first data requirement, multiple data segments associated with a second data requirement etc. The segmentation of the collection of data according to data requirement facilitates routing of the data on this basis.

In one embodiment, the orchestration system may further be configured to provide a plurality of routes via the network nodes of the network, wherein each of the routes is associated with a metric score range. One example of a metric score range amounts to a minimum metric score for the route. The metric score ranges may be obtained from metric scores of the respective network nodes. One or more of the provided plurality of routes may be included in the routing information. The embodiment enables the orchestration system to define a path through the network of network nodes that share a common score of a metric within a certain range. For example, a set of nodes may share a trust level score of at least 0.9, i.e. the minimum trust level score shared by a set of network nodes is 0.9. All data segments with a trust requirement of at least 0.9 may be routed over such network nodes. A second set of network nodes may have a trust level score of at least 0.3, so that data segments with a trust requirement higher than 0.3 may be routed over a path consisting of such network nodes.

In one embodiment, the orchestration system may further be configured to take account of one or more network link characteristics of one or more network links between the network nodes for providing the plurality of routes. The embodiment enables the orchestration system to take account of not only the network node scores but also the network links between network nodes that may influence data transfer performance.

In one embodiment, the one or more metric scores of the network nodes may comprise at least one of a node capability score, a node mobility score, a node energy score and a node behaviour score. The first data requirement and the second data requirement may be evaluated against the first node metric score and the second node metric score in the at least one network node.

The embodiment enables the orchestration system to take account of one or more node criteria. For example, if one or more nodes of the network may have a shortage of energy, a path using such a node may not be suitable for data segments that need to be delivered to the destination reliably, urgently and/or with a certain quality of service. Similarly, nodes that are not mobile may be used in a path for data segments that are required to be delivered frequently and/or reliably to a destination node.

In one embodiment, the one or more data requirements for a data segment may comprise at least one of a quality of service for the data, a data transmit power, a data size and a data frequency.
wherein the first node metric score and, if applicable, the second node metric score can be evaluated against the first data requirement and the second data requirement in the at least one network node.

A further aspect of the disclosure pertains to a method in an orchestration system for controlling routing of data through a network of network nodes. The at least one network node may be configured to provide a first network link to a first network node and a second network link to a second network node. The method may comprise one or more of the following steps. One step may comprise obtaining a first node metric score assigned to the first network node and a second node metric score assigned to the second network node. Another step may comprise providing routing information based on the first node metric score and second node metric score for the at least one network node. The routing information may be such that it enables the at least one network node to route a first data segment, associated with a first data requirement, of the data over the first network link when the first node metric score satisfies the first data requirement for the first data segment, and the second node metric score does not satisfy the first data requirement; and to route the first data segment over the second network link when the first node metric score and the second node metric score satisfy the first data requirement.

Yet another aspect of the disclosure comprises a computer program with one or more software code portions to, when run by one or more processors of the orchestration system, perform one or more steps of the above method.

Another aspect of the disclosure relates to a method in a network node for routing data. The network node may provide a first network link to a first network node and a second network link to a second network node. The method may comprise one or more of the following steps. One step may comprise obtaining routing information based on a first node metric score, assigned to the first network node, and a second node metric score, assigned to the second network node. Another step may comprise routing a first data segment, associated with a first data requirement, of the data over the first network link when the first node metric score satisfies the first data requirement for the first data segment, and the second node metric score does not satisfy the first data requirement. A further step may comprise routing the first data segment over the second network link when the first node metric score and the second node metric score satisfy the first data requirement. The method in the network node may also include the step of obtaining the routing information from an orchestration system as disclosed herein.

One more aspect of the disclosure comprises a computer program with one or more software code portions to, when run by one or more processors of the network node, perform one or more steps of the above method.

Yet another aspect of the disclosure involves a network system comprising at least one orchestration system as disclosed herein, and a plurality of network nodes as disclosed herein.

As will be appreciated by one skilled in the art, aspects of the present invention may be embodied as a system, a method or a computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Functions described in this disclosure may be implemented as an algorithm executed by a processor/microprocessor of a computer. Furthermore, aspects of the present invention may take the form of a computer program product embodied in one or more computer readable medium(s) having computer readable program code embodied, e.g., stored, thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples of a computer readable storage medium may include, but are not limited to, the following: an electrical connection having one or more wires, a portable computer diskette, a hard disk, a random access memory (RAM), a read-only memory (ROM), an erasable programmable read-only memory (EPROM or Flash memory), an optical fibre, a portable compact disc read-only memory (CD-ROM), an optical storage device, a magnetic storage device, or any suitable combination of the foregoing. In the context of the present invention, a computer readable storage medium may be any tangible medium that can contain, or store, a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fibre, cable, RF, etc., or any suitable combination of the foregoing. Computer program code for carrying out operations for aspects of the present invention may be written in any combination of one or more programming languages, including an object oriented programming language such as Java, Smalltalk, C++ or the like and conventional procedural programming languages, such as the "C" programming language or similar programming languages. The program code may execute entirely on the person's computer, partly on the person's computer, as a stand-alone software package, partly on the person's computer and partly on a remote computer, or entirely on the remote computer or server. In the latter scenario, the remote computer may be connected to the person's computer through any type of network, including a local area network (LAN) or a wide area network (WAN), or the connection may be made to an external computer (for example, through the Internet using an Internet Service Provider).

Aspects of the present invention are described below with reference to flowchart illustrations and/or block diagrams of methods, apparatus (systems), and computer program products according to embodiments of the present invention. It will be understood that each block of the flowchart illustrations and/or block diagrams, and combinations of blocks in the flowchart illustrations and/or block diagrams, can be implemented by computer program instructions. These computer program instructions may be provided to a processor, in particular a microprocessor or a central processing unit (CPU), of a general purpose computer, special purpose computer, or other programmable data processing apparatus to produce a machine, such that the instructions, which execute via the processor of the computer, other programmable data processing apparatus, or other devices create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

Moreover, a computer program for carrying out the methods described herein, as well as a non-transitory computer readable storage-medium storing the computer program are provided.

Elements and aspects discussed for or in relation with a particular embodiment may be suitably combined with elements and aspects of other embodiments, unless explicitly stated otherwise. Embodiments of the present invention will be further illustrated with reference to the attached drawings, which schematically will show embodiments according to the invention. It will be understood that the present invention is not in any way restricted to these specific embodiments.

### BRIEF DESCRIPTION OF THE DRAWINGS

Aspects of the invention will be explained in greater detail by reference to exemplary embodiments shown in the drawings, in which:
Figs. 1A-1C are schematic illustrations of embodiments of a network system comprising an orchestration system and a plurality of network nodes;
Fig. 2A is a schematic illustration of an embodiment of an orchestration system of a network system;
Fig. 2B is a schematic illustration of an embodiment of a network node of a network system;
Fig. 3 is a schematic illustration of an embodiment of a process flow in an orchestration system and network node for a specific application;
Fig. 4 is a flow diagram of an embodiment for a method for orchestrating the routing of data from a source network node to a destination network node in the embodiment of FIG. 3;
FIG. 5 is a schematic illustration of another embodiment of a network system comprising an orchestration system and network nodes; and
FIG. 6 is a block diagram of a processing system for a network node or computer system of a sender system or a part thereof.

### DETAILED DESCRIPTION OF THE DRAWINGS

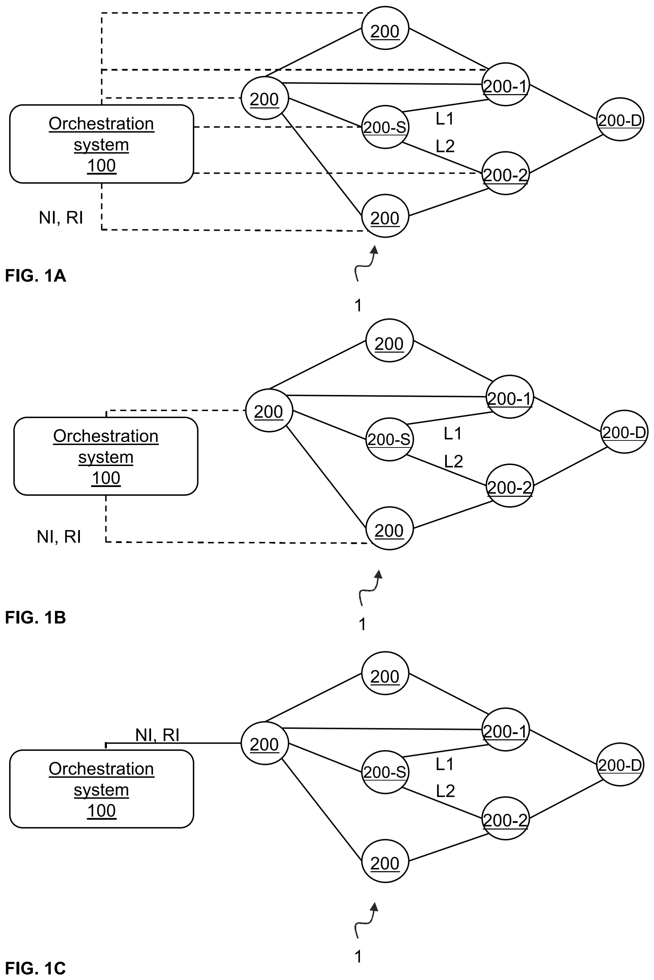

FIG. 1A is a schematic illustration of an embodiment of a network system 1 comprising an orchestration system 100 and a plurality of network nodes 200 connectable to each other via network links, such as data links L1, L2, shown as solid lines in FIG. 1A.

Orchestration system 100 may possibly comprise hardware, software, or a combination thereof, configured to manage and control the routing of data through a network by obtaining node information NI, such as metrics from network nodes 200, and providing routing information, RI, to the network nodes 200 based on these metrics. Examples of orchestration systems 100 include centralized servers that communicate with network nodes 200 to determine optimal routing paths, distributed systems where orchestration functions are shared among network nodes 200, or cloud-based platforms that manage network traffic.

A network node 200 may refer to any device or point in a network capable of sending, receiving, and/or forwarding data, including routers, switches, servers, or any other network-connected devices. Examples of network nodes include routers that direct traffic on the internet, servers that host applications, or edge devices in Internet of Things (IoT) networks. A source network node 200-S may be the origin of data, or an intermediary node having received data from a preceding network node 200, while a destination network node 200-D is the intended recipient node. Another example of a network node 200 is a user device, such as a 3GPP standard compliant user equipment, UE or a wearable device, such as a smartwatch.

The orchestration system 100 may be implemented in various configurations. In FIG. 1A, a centralized system is shown for the orchestration system 100 configured to establish remote connections with one or more network nodes 200, as shown by the dashed lines. The dashed lines may provide orchestration system 100 with node information NI enabling the orchestration system 100 to orchestrate routing of data to a destination network node 200-D by providing routing information RI.

Network nodes 200 are connected or connectable through network links. A network link may refer to a communication pathway between two network nodes 200 that allows for the transmission of data between them. Examples of network links include wired connections such as Ethernet cables, wireless connections such as Wi-Fi or cellular links, and optical fiber connections. The data links between network nodes and remote connections for node information NI and routing information RI may comprise wireless and/or wired connections.

It should be noted that it is not necessary for each of the network nodes 200 to have an individual remote connection to the orchestration system 200 as shown in FIG. 1A. In one embodiment, as shown in FIG. 1B, node information NI may be provided to a central orchestration system 100, at least in part, through data links (the solid lines in FIG. 1B) between network nodes 200. Since the orchestration system 100 is not necessarily part of the data flow, some nodes 200 may have individual remote connections to the orchestration system, as shown by the dashed lines in FIG. 1B. The connections may be wireless connections for nodes 200 closest to a radio interface of orchestration system 100, for example.

FIG. 1C is yet another embodiment of a network system 1, wherein orchestration system 100 is provided in a component in the data flow for the network nodes 200, as shown by the solid lines. Orchestration system 100 may, for example, be provisioned in a core network or radio network (a base station) of a 3GPP standard compliant telecommunications network or in an enterprise network. The orchestration system 100 may generate the data to be routed or receive the data to be routed and, as such, be a (source) network node 200 itself. The orchestration system 100 may process node information NI obtained from nodes 200 and provide routing information RI.

Source network node 200-S and intermediary network nodes 200-1, 200-2 in FIGS. 1A-1C may route the data towards the destination network node 200-D based on routing information RI. This schematic illustration highlights the interaction between the orchestration system 100 and the network nodes 200 in orchestrating data flow across the network.

Operation of orchestration system 100 will now be described in further detail for a centralized orchestration system 100 as shown in FIGS. 1A-1C. It is noted that part of this operation may be executed in at least one network node 200. It is also noted that the orchestration system 100 may be distributed over a plurality of network nodes. These implementation options allow the orchestration system 100 to be adapted to different network architectures and requirements, for example.

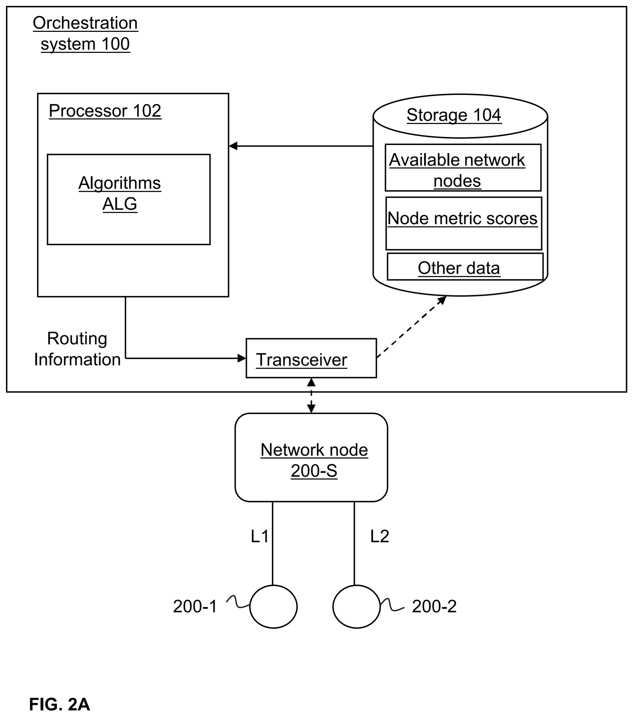

Referring to FIG. 2A, a schematic illustration of an embodiment of an orchestration system 100 is shown. The orchestration system 100 includes a processor system 102 and a storage component 104, which contains data on available network nodes 200, for example. Processor system 102 is configured to run one or more algorithms, ALG, to process node information NI and provide routing information RI to one or more of the network nodes 200.

The embodiment of FIG. 2A demonstrates how the orchestration system maintains and processes network node information to generate appropriate routing directives for network nodes 200. For example, in the network system 1 of FIGS. 1A-1C, source network node 200-S is configured to provide a first network link L to a first network node 200-1 and a second network link L2 to a second network node 200-2. The orchestration system 100 may be configured to obtain a first node metric score as node information, NI, assigned to the first network node 200-1 and a second node metric score as node information, NI, assigned to the second network node 200-2. A node metric score may refer to a quantitative value or value range assigned to a network node representing a characteristic or condition of that network node, which can be used to evaluate its suitability for routing specific data, i.e. data having an association data requirement. Examples of node metrics include values or ranges for trustworthiness, capability, or performance, such as trust levels indicating the security of a node, capability scores reflecting the computational power or bandwidth of a node, or energy scores indicating the available power of a node. The node information NI may be obtained and stored or have been prestored in storage component 104.

The orchestration system 100 is further configured, using algorithms ALG in processor system 102, to provide routing information RI based on the first node metric score and second node metric score for the at least one network node 200-S. The orchestration system 100 may further be configured to use as input to algorithms ALG one or more network link characteristics of one or more network links L1, L2 between the network nodes 200 for providing the plurality of routes. This information may be stored in storage 104 as an example of other data. The embodiment enables the orchestration system 100 to take account of not only the network node metric scores but also characteristics of the network links L1, L2 between network nodes that may influence data transfer performance. This allows optimizing routes based on link properties, such as bandwidth, latency, or reliability, in addition to node metrics.

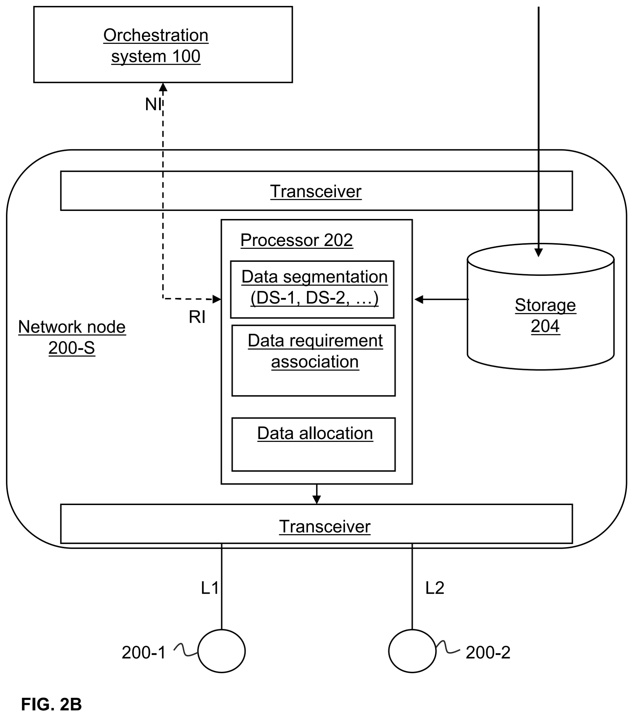

Referring to FIG. 2B, a schematic illustration of an embodiment of a source network node 200-S is shown. Source network node 200 comprises a processor system 202 and storage component 204. The network node 200-S may generate data or receive data from one or more previous network nodes, shown by the downward pointing arrow, and may store the data in storage component 204. The data can be segmented or separated into one or more data packets (DS-1, DS-2) using processor 202.

The network node 200-S may use processor system 202 to run a data requirement association algorithm to associate a data requirement to one or more data segments, DS-1, DS-2, such as a first data requirement to data segment DS-1 and a second data requirement, different from the first data requirement, to data segment DS-2. Subsequently, processor system 202 may use routing information RI from orchestration system 100 for routing to a first network node 200-1 over a first network link L1 or to a second network node 200-2 over a second network link L2. This embodiment demonstrates how the network node 200-S processes data and utilizes routing information RI to determine the appropriate path for each data segment.

More particularly, the collection of data, such as a large file, to be sent from source node 200-S to a destination node 200-D in FIG. 1 may comprise different data segments or may need to be segmented into different data segments DS-1, DS-2, .... A data segmentation algorithm may be applied. This algorithm entails a process or method by which data is divided into smaller units or segments for transmission or processing. An example comprises segmenting a large file into packets for network. A data segment may refer to a portion or subdivision of data that can be individually routed through the network based on its associated data requirements. Examples of data segments include packets, frames, or data chunks that are separated from a larger set of data for routing purposes. Each segment may comprise, for example, at least one data packet. A minimum segment size (e.g. a minimum number of packets per segment) may apply, for example to reduce the number of forwarding decisions.

Different data requirements may apply to different data segments. As used herein, a data requirement may refer to a specified criterion or condition that applies to the data. Examples of data requirements include a minimum trust level for secure data transmission, maximum allowed latency for real-time data, or specific quality of service, QoS, parameters necessary for streaming media. data requirement association algorithm. The data requirement association algorithm entails a method or process that associates particular data segments with specific data requirements. The data requirement association may, in one embodiment, assign to the first data segment an identifier of the first data requirement, such as a trust requirement identifier, enabling one or more of the network nodes of the network to route the first data segment using the identifier. The embodiment assists one or more network nodes in recognizing one or more data requirements by means of the identifier and evaluating the network node score(s) against the identified requirement(s). An example involves tagging data segments containing sensitive information with a security level identifier that dictates how the data should be handled during routing.

It is to be noted that the data segmentation algorithm and data requirement association algorithm may be one and the same algorithm. When analyzing data, assessment of the requirements for the data may automatically segment the data into segments corresponding to the requirement.

To decide on the routing, the data requirements must be satisfied by a network node's metric score, as known from or reflected by the routing information RI, for the data to be routed through a particular network path, such as a required level of trust, bandwidth, latency, or security. Furthermore, as also used herein, routing information may refer to information provided to a network node 200 that enables the network node 200, here network node 200-S, to determine how to forward data segments through the network to their destination based on various criteria. The requirement(s) may be matched against network node metric scores of network nodes to which the data segment may be forwarded to finally decide on the network node to (and thus on the network link over) which the data segment is to be transmitted. Based on the routing information, processor system 202 may run a data allocation algorithm.

In particular, the routing information RI from the orchestration system 100 may enable the source network node 200-S to route first data segment DS-1 associated with a first data requirement, of the data over the first network link L1 when the first node metric score satisfies the first data requirement for the first data segment, and the second node metric score does not satisfy the first data requirement. The routing information RI from the orchestration system 100 may further enable the source network node 100 to route the first data segment DS-1 over the second network link L2 when the first node metric score and the second node metric score satisfy the first data requirement.

For the second data segment DS-2, a second data requirement may be associated which is less strict than the first data requirement. For example, the second data segment DS-2 may require a lower trust from a network node 200 than the first data segment DS-1. Alternatively, or in addition, the second data segment DS-2 may require less energy from a network node for transmission than for the first data segment. In one embodiment, the first data requirement and the second data requirement as mentioned above may comprise a content level data requirement. A content level data requirement may refer to a data requirement that is based on the type or nature of the content of the data, such as its sensitivity, confidentiality, or priority. Examples of content level data requirements include classifications like "confidential," "high priority," or "real-time processing required," which dictate specific handling criteria during routing, which may be expressed in quantitative values or value ranges. The embodiment enables data routing based on user requirements, such as requirements set by the owner of the data.

The orchestration system 100 may be configured to provide routing information RI to the at least one network node 200-S enabling the at least one network node 200-S to route the second data segment DS-2 over the second network link L2 when the second node metric score satisfies the second data requirement. The embodiment enables data routing over other network nodes (here the second network node 200-2) than the network node(s) meeting the highest requirements (here the first network node 200-1), thereby assisting in avoiding or reducing network congestion.

The orchestration system 100 may further be configured to provide a plurality of routes via the network nodes 200 of the network, wherein each of the routes is associated with a metric score range. One example of a metric score range amounts to a minimum metric score for the route. The metric score ranges may be obtained from metric scores of the respective network nodes 200. One or more of the provided plurality of routes may be included in the routing information RI. The embodiment enables the orchestration system 100 to define a path through the network of network nodes 200 that share a common score of a metric within a certain range. For example, a set of nodes may share a trust level score of at least 0.9, i.e. the minimum trust level score shared by a set of network nodes is 0.9. All data segments with a trust requirement of at least 0.9 may be routed over such network nodes. A second set of network nodes may have a trust level score of at least 0.3, so that data segments with a trust requirement higher than 0.3 may be routed over a path consisting of such network nodes.

As mentioned above in relation to FIGS. 1A-1C, the orchestration system 100 may be implemented at least in part in the at least one network node 200 or be distributed over a plurality of network nodes 200. The orchestration system 100 may be configured to obtain the data to be routed and to run at least one of the data segmentation algorithm and the data requirement association algorithm. In one embodiment, the data segmentation algorithm is configured to segment the data to obtain the first data segment, and second data segment and any further data segments, if needed. The data segmentation algorithm may already optimize the different data segments to each contain data corresponding to a similar data requirement. Alternatively, a data segment may contain data corresponding to different data requirements, in which case a strictest data requirement may be associated to the data segment. The data requirement association algorithm may be configured to associate the first data segment DS-1 with the first data requirement, the second data segment DS-2 with a second data requirement and any further data segment with a corresponding further data requirement.

In embodiments, the orchestration system 100 may optimize data routing by considering network load and congestion levels. It may adjust route assignments for data segments to balance network resources, improve overall network performance, and efficiently handle multiple source-destination communications. The orchestration system 100 may collect information on available bandwidth from network nodes and current communication demands and execute a route optimization algorithm that takes into account trust-assigned routes, available bandwidth, and communication requirements for the network. By adjusting data segmentation and route assignments, the orchestration system 100 may reduce congestion, balance network load, and optimize the use of network resources.

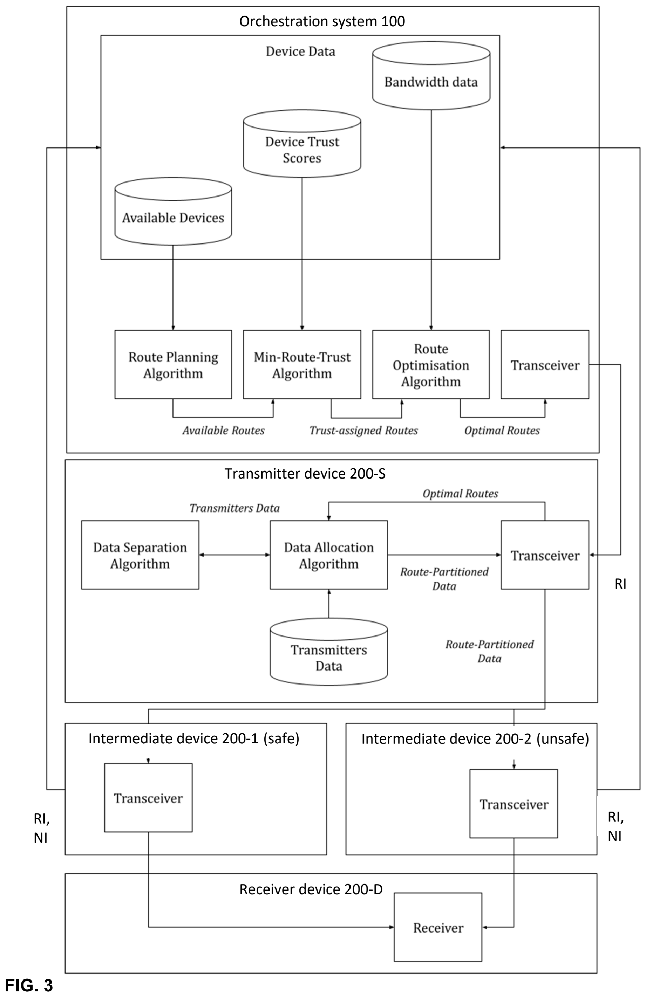

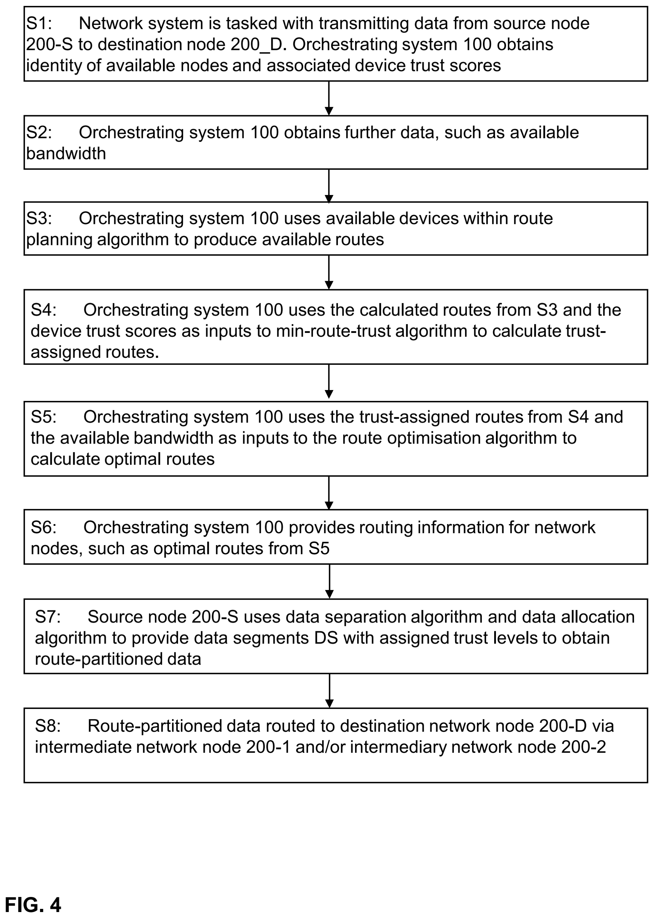

Referring now to FIGS. 3 and 4, a more detailed embodiment will be described for a particular application concerning data privacy. Data privacy requirements may vary significantly, and as such, all data is not equally 'private' or sensitive. Modern data mining processes employ sophisticated methods to identify sensitive information and process data according to individuals' personal privacy settings. Differences in data privacy requirements may be used for data routing in networks having network nodes complying to different trust levels for network nodes, thereby assisting in offloading some data traffic to less trusted nodes (here, the second network node) if the trust requirements allow this.

In general, for such an application, the first data requirement as referred to above may comprise a first trust requirement for the first data segment DS-1. The first node metric score and the second node metric score may comprise a first node trust level and a second node trust level, respectively. The routing information RI may enable the at least one network node 200 to route the first data segment DS-1, associated with the first trust requirement, of the data over the first network link L1 when the first node trust score satisfies the first trust requirement for the first data segment DS-1, and the second node trust score does not satisfy the first trust requirement and to route the first data segment DS-1 over the second network link L2 when the first node trust score and the second node trust score satisfy the first trust requirement. A second data segment DS-2 associated with a second trust requirement, less strict than the first trust requirement, such as a lower trust requirement. The orchestration system 100 may be configured to provide routing information RI to the at least one network node 200 enabling the at least one network node 200 to route the second data segment DS-2 over the second network link L2 when the second node trust score satisfies the second trust requirement.

Accordingly, the network node 200, such as source network node 200-S, may be configured such that the first data requirement comprises a first trust requirement for the first data segment DS-1. The first node metric score and the second node metric score may comprise a first node trust level and a second node trust level, respectively. The network node 200 may further be configured to route the first data segment DS, associated with the first trust requirement, of the data over the first network link L1 when the first node trust score satisfies the first trust requirement for the first data segment DS-1, and the second node trust score does not satisfy the first trust requirement. The network node 200 may further be configured to route the first data segment DS-1 over the second network link L2 when the first node trust score and the second node trust score satisfy the first trust requirement. A second data segment DS-2 associated with a second trust requirement, less strict than the first trust requirement. The network node may be configured to obtain routing information RI from the orchestration system 100 enabling the at least one network node to route the second data segment DS-2 over the second network link L2 when the second node trust score satisfies the second trust requirement. This enables routing different data segments DS based on their individual requirements, catering to varying levels of sensitivity within the data.

More in particular, the orchestration system 100 may be configured to control data routing through the network by executing algorithms that plan routes, assign trust levels to network nodes and, accordingly, routes, and optimize routes based on node trust levels and, possibly, other information, such as network constraints. For example, the orchestration system 100 may execute a route planning algorithm using available network nodes 200 to determine possible communication routes from a source network node to a destination network node via intermediary nodes. It may also execute a min-route-trust algorithm that labels each possible route with a minimum trust level or trust level range based on the trust levels of the nodes 200 within each route. Furthermore, the orchestration system 100 may run a route optimization algorithm that determines optimal routes by considering the trust-assigned routes and available bandwidth, aiming to reduce network congestion and balance network load.

Accordingly, the source network node 200-S may, for example, execute algorithms to assess trust requirements of data segments DS and route these data segments based on their trust requirements and the node trust levels or trust ranges of the routes. Specifically, the source network node 200-S may execute a data separation algorithm to obtain data segments and associate trust requirements to these data segments. These algorithms facilitate the dynamic and secure routing of data through the network, optimizing for factors such as trust, bandwidth, and network congestion.

In embodiments, data may be segmented into data points assigned with privacy levels, and these data points may be transmitted over multiple routes in parallel. Each route may be selected based on its trust level relative to the privacy levels of the data points, thereby optimizing network utilization while maintaining data security. Specifically, the source network node 200-S may segment the data into data points, assign a specific privacy level to each data point of set of data points, and decide on routing these data point over a route whose minimum node trust level is equal to or greater than the privacy level of the data point or set of data points. By transmitting the data points over their assigned routes in parallel, the network can efficiently use resources while adhering to data security requirements.

In detail, referring to FIG. 3, an illustration of a process flow in a network system 1 is presented, wherein routing is influenced by the trust requirements of data segments and routing information. Fig. 4 is a flow diagram of an embodiment for a method for orchestrating the routing of data from a source network node to a destination network node in the embodiment of FIG. 3.

The components of the network system 1 are as follows. A device capable of receiving data (the destination network node, 200-D) contains at least a receiver for receiving wired or wireless data (e.g. a UE in a 5G network). The network system 1 further contains a device capable of communicating with at least one other device. This device may be the source network node 200-S and contains at least a transceiver, processor and a data storage device. The source network node 200-S stores data (the "t Transmitters Data") within its data storage device which is to be transmitted to the destination network node 200-D. The individual data (the "data-points") within the data from the source network node 200-S each has a certain trust level.

Network system 1 contains a set of intermediary network nodes 200, such as mobile phones (UEs) or routers capable of forwarding received data to another device. Each intermediate network node 200 contains a transceiver, a data storage device, and a processor. For explanatory purposes, there are two intermediary network nodes 200 considered. Intermediary network node 200-1, which is a trusted (safe) device in the network and intermediary network node 200-2, which is an untrusted (unsafe) device in the network.

Network system 1 further comprises or is connected to an orchestration system 100. The orchestration system 100 is capable of communicating with multiple devices and collecting data and contains at least a transceiver, a processor and a data storage device. The orchestration system 100 may be a centralised node within a wireless network, such as a base station, a temporarily designated device within a typically decentralised network, or, the source network node 200-S itself, for example.

The orchestration system 100 has or obtains a list of available devices (the "Available Devices" in FIG. 3), showing the intermediary network nodes 200 that are available in the network for routing the data. This list may also contain the source network node 200-S and/or destination network node 200-D.

The above amounts to steps S1 and S2 in the flow diagram of FIG. 4.

Step S1 shows that network system 1 is tasked with transmitting data from the source network node 200-S to the destination network node 200-D via multi-hop routing. The orchestration system 100 obtains the identity of the available devices 200 in the network and their relative "Device Trust Score". The available devices may be determined by any known method, e.g. acquiring a list of active devices which are available for data forwarding. The orchestration system 100 may obtain the device trust scores directly from the network nodes 200 or via a database of pre-calculated values. The trust scores may be determined through processes akin to behavioural monitoring. For example, where the network nodes 200 in the network monitor the communication features of each other such that a level of trust may be learnt. These may then be aggregated across the network to achieve an agreed level of trust in the network nodes 200. Alternatively, network nodes 200 may be given an inherent device trust score based on their device type, manufacturer, the assigned user, the environment, the owner, etc. Trust scores may be specific to certain communication aspects, such as chances of packet loss, latency, security threat, etc.

Step S2 amounts to the orchestration system 100 obtaining further data relevant to the routing decisions, such as bandwidth data. The available bandwidth may be obtained by requesting the scheduled traffic from each device or a central traffic-scheduling entity. Alternatively, this may be obtained via modelling of the network. The available bandwidth indicates the bandwidth for the network nodes 200 and may be highly granular, such as the exact "mbps", or a generalised indicator, such as "high, medium, or low", may be used.

The orchestration system 100 has the capability to run one or more algorithms. These algorithms include one or more of the following exemplary algorithms.

One algorithm (referred to as the "Route Planning Algorithm" in FIG. 3 ) may use the transmitter, receiver and available devices to determine the possible routes (the "Available Routes" in FIG. 3) across which the data from the source network node could be delivered to the destination network node 200-D, via the intermediary network nodes 200-1 and 200-2. The available routes comprise of possible communication routes from the source network node 200-S to the destination network node 200-D, via the intermediary network nodes 200-1 or 200-2, describing the respective intermediary network nodes and the transmission sequence.

Running the route-planning algorithm amounts to step S3 in FIG. 4. In this step, the orchestration system 100 uses the available network nodes 200 within the route planning algorithm to produce the available routes. Optionally, to accommodate balancing network load, the orchestration system 100 may collate the data of multiple source network node-to-destination network node communications. As such, the route planning algorithm may further input the routes and communication details of additional source network node-destination network node pairings.

One further algorithm (referred to as the "Min-Route-Trust Algorithm" in FIG. 3) may use the available routes and device trust scores to label each available route (the "Trust-assigned Routes" in FIG. 3) with the minimum-trust score, given the respective network nodes 200 of each route. In embodiments, this algorithm may operate on parameters other than trust level of the intermediary network nodes, e.g. battery capacity.

Running the min-route-trust algorithm amounts to step S4 in FIG. 4. In this step, the orchestration system 100 then uses the calculated available routes from step S3 and the device trust scores as inputs to the min-route-trust algorithm to calculate the trust-assigned routes.

One further algorithm (referred to as the "Route Optimisation Algorithm" in FIG. 3) may use the trust-assigned routes and available bandwidth to determine the optimal pathways (the "Optimal Routes" in FIG. 3), with respect to reducing congestion across the network, across which the data from the source network node 200-S could be delivered to the destination network node 200-D, via the intermediary network nodes 200-1, 200-2. For example, there may be multiple parallel paths and their respective available bandwidth and minimum-trust score may be labelled as follows: send up to x mb across path a (high trust), y mb across path b (medium trust), and z mb across path c (low trust).

Running the route optimisation algorithm amounts to step S5 in FIG. 4. In this step, the orchestration system 100 may use the calculated trust-assigned routes from step S4 and the available bandwidth as inputs to the route optimisation algorithm to calculate the optimal routes as routing information RI, which may be sent to one or more network nodes 200, such as network node 200-S.

Where the orchestration system 100 is aware of multiple other source network nodes 200-S communicating to destination network nodes 200-D, the route optimisation algorithm may adjust the optimal routes to best serve the overall network for load balancing. For example, where two source network nodes 200-S wish to send data across the same area of the network, the available bandwidth of a shared intermediary network node 200 may be shared by both and hence the optimal routes will indicate that a route using this intermediary network node only has half the available bandwidth.

Hence, in step S5 of FIG. 4, this step may optionally accommodate balancing network load, wherein the orchestration system 100 may collate the data of multiple source network node-to-destination network node communications. As such, the route optimisation algorithm may further input the routes and communication details of additional source network node-destination network node pairings.

The transmission and reception of the routing information RI is shown in FIG. 4 as step S6. The orchestration system transmits the routing information, i.e. the optimal routes, calculated in step S5 via its transceiver to the source network nodes' transceiver. Alternatively, the orchestration system 100 is the source network node 200-S itself, so that the routing information (e.g. the optimal routes), calculated in step S5, can be directly transferred to the data allocation algorithm discussed below.

One or more network nodes 200 may receive the routing information RI. The source network node 200-S may, for example, also run one or more algorithms.

These one more algorithms for the network node 200 may comprise one or more of the following algorithms.

One algorithm (referred to as the "Data Separation Algorithm" in FIG. 3) assesses the trust level of data points within the data from the source node 200-S for a more granular privacy level (the "data-point privacy level") and assigns the data-point privacy level to the data point. The data separation algorithm estimates the privacy of the individual data points within the data from the source network node using evaluation processes akin to generally known feature identification processes. Alternatively, the data separation algorithm may identify the different features within the data and a personalised privacy agent4 may be used to determine the privacy label of the data. A data-point privacy level represents how private the individual data-point is, where a high data-point privacy level indicates highly confidential data and vice-versa.

The source network node 200 then uses the optimal routes and the data from the source network node as inputs to the data allocation algorithm to calculate the route-partitioned data. To that end, the source network node 200-S comprises an algorithm, (referred to as the "Data Allocation Algorithm" in FIG. 3) which uses the routing information R, i.e. the optimal routes, from the route optimization algorithm in the orchestration system 100) and the data from the source network node to optimally segment the data from the source network node and assign the segments to the routes (the "route-partitioned data" in FIG. 3). This is achieved by assigning the data points based on their data point privacy level, to a route with a minimum-trust score that is greater than the data point privacy level, for example. The data allocation algorithm may achieve this by forwarding individual data segments (or packets) of the data points from the source network node 200-S to the data separation algorithm. This may be used to prevent the data separation algorithm from having to process all of the transmitters data. Alternatively, all of the data points may be processed by the data separation algorithm prior to assigning the routes.

Running the data separation algorithm and data allocation algorithm amounts to step S7 in FIG. 4. In this step, the source node 200-S creates data segments DS of a particular trust level to provide the route-partitioned data. The assignment of a data-point to a route is achieved to optimise the distribution of data for the network needs concerning the available bandwidth across routes and their minimum-trust score.

For example, the algorithm may assign a larger number of routes with lower minimum-trust scores to minimise congestion on routes with higher minimum-trust scores. Optionally, where there may be multiple low trust routes filled to capacity, another higher trust route with sufficient capacity may be used instead to minimise the number of parallel routes used. The algorithm may take conservative action and assign segments of data from the source network node 200-S to lower minimum-trust score routes only until the remaining segment of the data from the source network node is within the available bandwidth of a route with a higher minimum-trust score, thereby increasing the overall security of the transmitters data. The data allocation algorithm may stop sending transmitter data to the data separation algorithm when a sufficient amount of data has been labelled for an optimal route to be used.

The data allocation algorithm may process the data from the source network node 200-S and attempt to assign the data points to the optimal routes. Where necessary, the data allocation algorithm may forward the data to the data separation algorithm for further privacy refinement. For example, if intermediary network node 200-1 has sufficient available bandwidth then all of the data from the source network node can be forwarded via intermediary network node 200-1. However, where this is non-optimal (according to the optimal routes) or intermediary network node 200-1 has insufficient available bandwidth, intermediary network node 200-2 may need to be used. However, the min-trust score of intermediary network node 200-2 is lower and therefore it must be seen which data points of the data from the source network node 200-S can be shared across intermediary network node 200-2.

The data separation algorithm then processes the data from the source network node given to it and returns the same data to the data allocation algorithm, where individual data points (or features of the data) are labelled with a data-point privacy level. The data allocation algorithm may then use this refined data to optimise the allocation of the data from the source network node across the optimal routes. Alternatively, the data from the source network node 200-S may be sent directly to the data separation algorithm and fully processed directly. Where the route-partitioned-data is to be shared across multiple routes in parallel, the data may be indexed accordingly to ensure it is correctly reconstructed at the destination network node 200-D.

In the final step S8, the route-partitioned-data is then sent to respective intermediary network nodes 200-1 and/or 200-2 via the transmitter's transceiver. The intermediary network nodes obtain their respective route partitioned data and forward this on to the destination network node 200-D. The destination network node 200-D obtains the route-partitioned-data containing the transmitter's data, and uses it accordingly. If parallel routing has been used, the index of the data is used to re-assemble the original order of the transmitters data.

In embodiments, data may be processed to determine privacy levels before route calculation occurs. This enables the orchestration system 100 to focus route planning efforts only on routes that meet the necessary privacy requirements, thereby optimizing computational resources and reducing energy consumption. Specifically, the source network node 200-S may process the data to assign privacy levels to data points prior to initiating route planning. The minimum required trust level may be communicated to the orchestration system 100, which then uses these privacy levels to limit route computations to only those routes with trust scores that satisfy the data's privacy requirements. For example, where the data-point privacy levels are all >0.5, the system would not consider using any intermediary network nodes whose node trust score is below 0.5. As such, the min-route-trust algorithm would only output trust-assigned routes that reflected this. The decision of the system to process the routes or the data first may be governed by the energy cost attributed to the respective processes and energy constraints of the devices required. By avoiding unnecessary calculations for unsuitable routes, computational and energy resources are conserved.

As mentioned above, routing decisions may, alternatively or in addition, be based on node metrics other than trust, such as energy availability, node mobility, and/or quality of service (QoS) requirements.

The orchestration system 100 may obtain various node metrics including energy scores, mobility scores, and capability scores, and collect data requirements such as energy consumption needs and QoS demands for different data types. A node mobility score refers to a metric reflecting the mobility characteristics of a node, such as how frequently it changes location or the stability of its network connection due to movement. Examples include lower scores for highly mobile devices like smartphones compared to stationary servers. A node energy score refers to a metric indicating the remaining or available energy resources of a node, significant in networks where nodes might be battery-powered. An example is a sensor node in an loT network with limited battery life being assigned an energy score based on its remaining power. A node behavior score refers to a metric reflecting the past behavior of a node, typically in terms of adherence to protocols, reliability, or potential malicious activity. Examples include scoring nodes lower if they have a history of dropping connections or not complying with network protocols. The term "quality of service" refers to performance characteristics of data transmission, such as bandwidth, latency, jitter, and error rate, that define the quality and reliability experienced by the end user. Examples include ensuring a minimum bandwidth for video streaming or low latency for real-time gaming applications.

Moreover, further alternative relationships between the network nodes 200 and the data may equally be considered. These may include but are not limited to varying data types that require more power to transmit and the amount of energy that a network node has available. For example, resource constrained intermediary network nodes using energy harvesting for power may not be suitable for sharing large high frequency data. Another example includes quality of service demands of certain data and the mobility of the intermediary network nodes available, as mentioned above. For example, a static intermediary network node may be more suitable for sharing data that has a high quality of service requirement which requires larger chunks of data to be consistently transmitted.

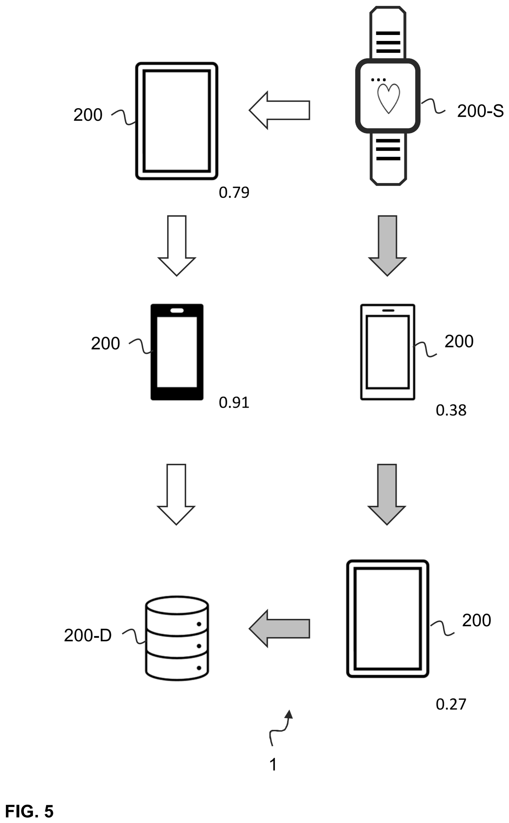

FIG. 5 is a schematic illustration of another embodiment of a network system 1 comprising an orchestration system and network nodes 200. Network system 1 has a source network node 200-S (here a smart watch), a plurality of intermediate network nodes (here tablet computers and cell phones) and a destination network node 200-D (here a network attached storage, NAS, module). Smartwatch 200-S generates data of different privacy-sensitive levels, such as health data, payment data (both considered highly confidential) and music preferences (considered of low confidentiality).

An orchestration system 100 (not shown in FIG. 5) may be included in smartwatch 200-D, for example, or may be distributed over network nodes 200-S, 200, and/or 200-D. As illustrated in FIGS. 1A-1C, orchestration system 100 may also, at least in part, be external to the network nodes.

Orchestration system 100 has obtained node trust levels for the intermediate nodes 200, as shown by the values at the lower-right corner of these intermediate nodes. The tablet computer 200 with trust level 0.79 and the cell phone 200 with trust level 0.91 may be owned by the owner of the smartwatch 200-S. The cell phone with node trust level 0.38 and the tablet computer with node trust level 0.27 may belong to other people, for example friends, than the owner of smartwatch 200-S. Routing information is obtained by the smartwatch 200-S.

Smartwatch 200-S may distinguish between data points with various trust requirements. Data points requiring a node trust level higher than 0.75, for example, will be routed through the smartwatch owner's own devices (indicated by the white arrows), whereas data points requiring node trust levels higher than 0.25 may be routed through the nodes 200 indicated by the grey arrows.

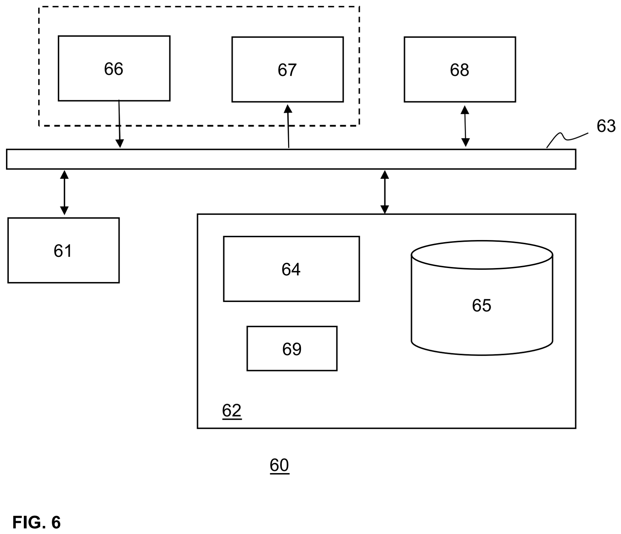

FIG. 6 depicts a block diagram illustrating an exemplary processing system according to a disclosed embodiment, e.g. a (part of an) orchestration system 100 and/or network node 200 as described above. As shown in FIG. 6, the processing system 60 may include at least one processor 61 coupled to memory elements 62 through a system bus 63. As such, the processing system may store program code within memory elements 62. Further, the processor 61 may execute the program code accessed from the memory elements 62 via a system bus 63. In one aspect, the processing system may be implemented as a computer system that is suitable for storing and/or executing program code. It should be appreciated, however, that the processing system 60 may be implemented in the form of any system including a processor and a memory that is capable of performing the functions described within this specification.

The memory elements 62 may include one or more physical memory devices such as, for example, local memory 64 and one or more bulk storage devices 65. The local memory may refer to random access memory or other non-persistent memory device(s) generally used during actual execution of the program code. A bulk storage device may be implemented as a hard drive or other persistent data storage device. The processing system 60 may also include one or more cache memories (not shown) that provide temporary storage of at least some program code in order to reduce the number of times program code must be retrieved from the bulk storage device 65 during execution.

Input/output (I/O) devices depicted as an input device 66 and an output device 67 optionally can be coupled to the processing system. Examples of input devices may include, but are not limited to, a space access keyboard, a pointing device such as a mouse, or the like. Examples of output devices may include, but are not limited to, a monitor or a display, speakers, or the like. Input and/or output devices may be coupled to the processing system either directly or through intervening I/O controllers.

In an embodiment, the input and the output devices may be implemented as a combined input/output device (illustrated in FIG. 6 with a dashed line surrounding the input device 66 and the output device 67). An example of such a combined device is a touch sensitive display, also sometimes referred to as a "touch screen display" or simply "touch screen" that may be provided with the UE. In such an embodiment, input to the device may be provided by a movement of a physical object, such as e.g. a stylus or a finger of a person, on or near the touch screen display.

A network adapter 68 may also be coupled to the processing system to enable it to become coupled to other systems, computer systems, remote network devices, and/or remote storage devices through intervening private or public networks. The network adapter may comprise a data receiver for receiving data that is transmitted by said systems, devices and/or networks to the processing system 60, and a data transmitter for transmitting data from the processing system 60 to said systems, devices and/or networks. Modems, cable modems, and Ethernet cards are examples of different types of network adapter that may be used with the processing system 60.

As pictured in FIG. 6, the memory elements 62 may store an application 69. In various embodiments, the application 69 may be stored in the local memory 64, the one or more bulk storage devices 65, or apart from the local memory and the bulk storage devices. It should be appreciated that the processing system 60 may further execute an operating system (not shown in FIG. 6) that can facilitate execution of the application 69. The application 69, being implemented in the form of executable program code, can be executed by the processing system 60, e.g., by the processor 61. Responsive to executing the application, the processing system 60 may be configured to perform one or more operations or method steps described herein.

Various embodiments of the invention may be implemented as a program product for use with a computer system, where the program(s) of the program product define functions of the embodiments (including the methods described herein). In one embodiment, the program(s) can be contained on a variety of non-transitory computer-readable storage media, where, as used herein, the expression "non-transitory computer readable storage media" comprises all computer-readable media, with the sole exception being a transitory, propagating signal. In another embodiment, the program(s) can be contained on a variety of transitory computer-readable storage media. Illustrative computer-readable storage media include, but are not limited to: (i) non-writable storage media (e.g., read-only memory devices within a computer such as CD-ROM disks readable by a CD-ROM drive, ROM chips or any type of solid-state non-volatile semiconductor memory) on which information is permanently stored; and (ii) writable storage media (e.g., flash memory, floppy disks within a diskette drive or hard-disk drive or any type of solid-state random-access semiconductor memory) on which alterable information is stored. The computer program may be run on the processor 61 described herein.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of embodiments of the present invention has been presented for purposes of illustration but is not intended to be exhaustive or limited to the implementations in the form disclosed. Many modifications and variations will be apparent to those of ordinary skill in the art without departing from the scope of the claims. The embodiments were chosen and described in order to best explain the principles and some practical applications of the present invention, and to enable others of ordinary skill in the art to understand the present invention for various embodiments with various modifications as are suited to the particular use contemplated.

## Claims

1. An orchestration system configured to control routing of data through a network of network nodes, wherein at least one network node is configured to provide a first network link to a first network node and a second network link to a second network node, wherein the orchestration system is configured to:
- obtain a first node metric score assigned to the first network node and a second node metric score assigned to the second network node;
- provide routing information based on the first node metric score and second node metric score for the at least one network node, wherein the routing information enables the at least one network node to:
- route a first data segment, associated with a first data requirement, of the data over the first network link when the first node metric score satisfies the first data requirement for the first data segment, and the second node metric score does not satisfy the first data requirement; and
- route the first data segment over the second network link when the first node metric score and the second node metric score satisfy the first data requirement.

2. The orchestration system according to claim 1, wherein the data comprises a second data segment associated with a second data requirement, less strict than the first data requirement, and the orchestration system is configured to provide routing information to the at least one network node enabling the at least one network node to route the second data segment over the second network link when the second node metric score satisfies the second data requirement.

3. The orchestration system according to one or more of the preceding claims, wherein the first data requirement and, if dependent on claim 2, the second data requirement comprise a content level data requirement.

4. The orchestration system according to one or more of the preceding claims, wherein the first data requirement comprises a first trust requirement for the first data segment and wherein the first node metric score and the second node metric score comprise a first node trust level and a second node trust level, respectively, enabling the at least one network node to:
- route the first data segment, associated with the first trust requirement, of the data over the first network link when the first node trust score satisfies the first trust requirement for the first data segment, and the second node trust score does not satisfy the first trust requirement; and
- route the first data segment over the second network link when the first node trust score and the second node trust score satisfy the first trust requirement.

5. The orchestration system according to claim 4, wherein the data comprises a second data segment associated with a second trust requirement, less strict than the first trust requirement, and the orchestration system is configured to provide routing information to the at least one network node enabling the at least one network node to route the second data segment over the second network link when the second node trust score satisfies the second trust requirement.

6. The orchestration system according to one or more of the preceding claims, wherein the first data segment comprises an identifier of the first data requirement, such as a trust requirement identifier, enabling one or more of the network nodes of the network to route the first data segment using the identifier.

7. The orchestration system according to one or more of the preceding claims, wherein the orchestration system is implemented:
- as a centralized system configured to establish a remote connection with the at least one network node, wherein the centralized system is configured to provide the routing information over the remote connection ;
- at least in part in the at least one network node, wherein, optionally, the at least one network node is a network node generating the data; or
- distributed over a plurality of network nodes of the network.

8. The orchestration system according to one or more of the preceding claims, wherein the orchestration system is implemented:
- at least in part in the at least one network node; or
- distributed over a plurality of network nodes
and is configured to obtain the data to be routed and to run at least one of a data segmentation and a data requirement association algorithm, wherein
- the data segmentation algorithm is configured to segment the data to obtain the first data segment; and
- the data requirement association algorithm is configured to associate the first data segment with the first data requirement.

9. The orchestration system according to one or more of the preceding claims, wherein the orchestration system is further configured to provide a plurality of routes via the network nodes of the network, wherein each of the routes is associated with a metric score range, such as a minimum metric score for the route, wherein the metric scores ranges are obtained from metric scores of the respective network nodes, and one or more of the provided plurality of routes are included in the routing information.

10. The orchestration system according to one or more of the preceding claims, wherein the orchestration system is further configured to take account of one or more network link characteristics of one or more network links between the network nodes for providing the plurality of routes.

11. The orchestration system according to one or more of the preceding claims, wherein at least one of the first node metric score and, if dependent on claim 2, the second node metric score comprise at least one of:
- a node capability score;
- a node mobility score;
- a node energy score;
- a node behaviour score;
wherein the first data requirement and, if dependent on claim 2, the second data requirement can be evaluated against the first node metric score and second node metric score in the at least one network node.

12. The orchestration system according to one or more of the preceding claims, wherein at least one of the first data requirement and, if dependent on claim 2, the second data requirement comprise at least one of:
- a quality of service for the data;
- a data transmit power;
- a data size;
- a data frequency;
wherein the first node metric score and, if dependent on claim 2, the second node metric score can be evaluated against the first data requirement and second data requirement in the at least one network node.

13. A network node for routing data configured to provide a first network link to a first network node and a second network link to a second network node, wherein the network node is configured to obtain routing information based on a first node metric score, assigned to the first network node, and a second node metric score, assigned to the second network node, wherein the network node is further configured to:
- route a first data segment, associated with a first data requirement, of the data over the first network link when the first node metric score satisfies the first data requirement for the first data segment, and the second node metric score does not satisfy the first data requirement; and
- route the first data segment over the second network link when the first node metric score and the second node metric score satisfy the first data requirement,
wherein the network node is further configured to obtain the routing information from an orchestration system according to one or more of the claims 1-12.

14. The network node according to claim 13, wherein the first data requirement comprises a first trust requirement for the first data segment and wherein the first node metric score and the second node metric score comprise a first node trust level and a second node trust level, respectively, and wherein the network node is configured to:
- route the first data segment, associated with the first trust requirement, of the data over the first network link when the first node trust score satisfies the first trust requirement for the first data segment, and the second node trust score does not satisfy the first trust requirement; and
- route the first data segment over the second network link when the first node trust score and the second node trust score satisfy the first trust requirement.

15. The network node according to claim 14, wherein the data comprises a second data segment associated with a second trust requirement, less strict than the first trust requirement, and the network node is configured to obtain routing information from the orchestration system to route the second data segment over the second network link when the second node trust score satisfies the second trust requirement.
